# FASCICULE DE BREVET EUROPEEN

(11) **EP 3 195 303 B1**
(45) Date de publication et mention de la délivrance du brevet: **05.06.2019**
(21) Numéro de dépôt: 15775770.9
(22) Date de dépôt: 15.09.2015
(51) Int. Cl.: G10D 9/02

(54) **ANCHE COMPOSITE**
VERBUNDROHRBLATT
COMPOSITE REED

(30) Priorité: 16.09.2014 FR 1458740
(43) Date de publication de la demande: 26.07.2017
(73) Titulaire: Varlepic Participations, 75018 Paris (FR)
(72) Inventeur: VAN DOREN, Bernard, F-83980 Le Lavandou (FR)
(74) Mandataire: Fédit-Loriot
(86) Numéro de dépôt international: PCT/FR2015/052473
(87) Numéro de publication internationale: WO 2016/042259

(56) Documents cités:
- FR-A3- 2 646 270
- GB-A- 783 766
- US-A- 5 542 331
- US-A- 6 087 571

## Description

La présente invention se rapporte à une anche composite pour instrument à vent.

Un domaine d'application envisagé est celui des instruments à vent dans lesquels l'anche est mise en vibration par une colonne d'air produite par le souffle de l'instrumentiste. Il s'agit par exemple des clarinettes ou des saxophones, pour lesquels une anche simple est mise en oeuvre, ou encore des hautbois, basson, bombarde et autres cornemuse, à anche double.

Traditionnellement, les anches simples sont fabriquées dans une lamelle de roseau, laquelle est usinée pour obtenir une forme et une épaisseur adaptée. L'anche est maintenue sur un bec de l'instrument au moyen d'une ligature généralement métallique. Ainsi, les anches sont réalisées dans un matériau naturel dont les propriétés mécaniques ne sont ni constantes d'un roseau à l'autre, et ni constantes dans le temps. Or, la sonorité des instruments équipés de telles anches en dépend. Les anches sont ainsi très sensibles aux caractéristiques physico-chimiques du roseau, desquelles en découlent les propriétés mécaniques.

Partant, il a été imaginé de réaliser industriellement des anches composites reproduisant non seulement les caractéristiques mécaniques des anches en matériau naturel, mais aussi dont les propriétés sont reproductibles d'une anche à l'autre.

Pour ce faire, il a été inséré dans une matrice d'un matériau polymère, des fibres courtes en espérant obtenir des propriétés analogues à celles du roseau. Toutefois, le matériau mixte obtenu, à partir de ces fibres naturelles et d'un matériau de synthèse ne donne pas satisfaction d'un point de vue de la sonorité.

Partant, il a été imaginé de réaliser une anche totalement synthétique. Ainsi on a réalisé une anche composite présentant une matrice faite d'un polymère thermodurcissable époxy ou bien phénolique et de fibres de renfort, en carbone par exemple. On pourra se référer au document US 5 542 331, lequel décrit la réalisation d'une telle anche composite.

La publication de brevet FR2646270 divulgue une anche d'instrument à vent en polymère ayant des fibres de renfort, ou bien comprenant une structure autorenforcée (par cristalisation). Les fibres peuvent être en plastique polyéthylène et sont orientées dans une direction prédéfinie. La direction n'est cependant pas spécifiée.

Le brevet GB783766 présente une anche synthétique pour instrument à vent. Des fibres textiles (tel que le Nylon ou Dacron) peuvent être utilisées comme renfort. La matrice peut être constitué de polystyrène. Ces deux matériaux étant des thermoplastiques.

Si les anches ainsi obtenues présentent des propriétés mécaniques relativement reproductibles et constantes dans le temps, leur qualité sonore n'est toutefois pas équivalente à celle que l'on peut obtenir avec le roseau.

Aussi, un problème qui se pose et que vise à résoudre la présente invention, est de fournir une anche composite dont les propriétés mécaniques sont constantes, mais aussi, qui permette d'obtenir une bonne sonorité des instruments dans lesquels elle est mise en oeuvre.

Dans ce but, et selon un premier objet, la présente invention propose une anche composite pour instrument à vent présentant une matrice faite d'un matériau polymère et une pluralité de fibres de renfort faites d'un autre matériau polymère, noyée à l'intérieur de ladite matrice ; ledit autre matériau polymère étant un matériau polymère thermoplastique comme définie par l'objet de la revendication 1.

Ainsi, une caractéristique de l'invention réside dans la mise en oeuvre de fibres de renfort faites d'un polymère thermoplastique, choisi par exemple dans la famille des polyoléfines. Et selon un mode de mise en oeuvre de l'invention particulièrement avantageux, les fibres de ladite pluralité de fibres sont des fibres continues, et elles s'étendent selon une direction longitudinale à l'intérieur de ladite matrice. Autrement dit, les fibres de renfort s'étendent selon la direction longitudinale de l'anche, et sur toute sa longueur. Ainsi, les fibres de renfort s'étendent longitudinalement à l'intérieur de la matrice et confèrent à l'anche des propriétés mécaniques anisotropes. Grâce aux fibres, le module d'élasticité de l'anche est supérieur dans le sens longitudinal, à celui qui est mesuré dans le sens transversal.

Au surplus, selon une caractéristique particulièrement avantageuse, ledit un matériau polymère, constituant la matrice, est un matériau polymère thermoplastique également. Il appartient à la famille des polyoléfines également.

De plus, ledit matériau polymère de la matrice présente une densité relative comprise entre 0,80 et 0,92. De la sorte, on obtient une anche composite dont les propriétés mécaniques sont très proches de celles d'une lamelle en roseau naturel. On obtient de la sorte une sonorité de l'instrument équipé d'une telle anche équivalente à celle du même instrument équipé d'une anche en roseau. Au surplus, ses propriétés mécaniques sont reproductibles d'une anche à l'autre.

En outre, les matériaux polymères thermodurcissables utilisés selon l'art antérieur pour former la matrice, présentent des densités relatives généralement supérieures à 1. Alors qu'avec les matériaux polymères thermoplastiques, et notamment avec les polyoléfines, on peut fournir des matériaux dont la densité est inférieure à 1, et plus précisément comprise entre 0,80 et 0,92, et par exemple entre 0.80 et 0.90.

La densité relative, est ainsi définie comme étant le rapport de la masse volumique du matériau par rapport à la masse volumique d'un autre corps pris comme référence, et en l'espèce de l'eau à 4°C.

On observera que le matériau polymère thermoplastique et plus précisément les polyoléfines utilisées pour former la matrice, présente une telle densité sans autre artifice. En effet, il est toujours possible d'abaisser la densité d'un matériau en y incorporant, par exemple de l'air sous forme de bulles ou bien de billes creuses. Toutefois, les propriétés mécaniques en sont considérablement affectées et le matériau ne convient plus pour fabriquer des anches.

Préférentiellement, ledit autre matériau polymère présente une température de fusion supérieure à la température de fusion dudit un matériau polymère. De la sorte, et ainsi qu'on l'expliquera ci-après plus en détail, les fibres de renfort présente une température de fusion supérieure au matériau polymère formant la matrice, et par conséquent, il est aisé de venir noyer les fibres à l'intérieur de la matrice sans altérer leurs propriétés intrinsèques. Préférentiellement, les fibres de renfort de ladite pluralité de fibres sont des fibres continues.

Selon un autre objet, l'invention propose un procédé de fabrication d'une anche composite, comme définit dans la revendication 6, le procédé comprenant les étapes suivantes : a) on fournit un matériau polymère à l'état fondu et une pluralité de fibres faites d'un autre matériau polymère ; b) on noie lesdites fibres à l'intérieur dudit matériau polymère à l'état fondu ; c) on provoque le durcissement dudit un matériau polymère à l'état fondu de manière à emprisonner lesdites fibres ; et, d) on forme ladite anche composite dans ledit matériau polymère durci ; ledit autre matériau polymère est un matériau polymère thermoplastique. Préférentiellement, ledit un matériau polymère, formant la matrice, est un matériau polymère thermoplastique.

Ainsi, une caractéristique de l'invention réside dans la mise en oeuvre de fibres en matériau polymère thermoplastique pour la réalisation d'une anche.

Selon un mode de mise en oeuvre préférentielle, à l'étape b), on maintient les fibres de ladite pluralité de fibres sensiblement parallèlement entre elles pour noyer ladite pluralité de fibres à l'intérieur dudit matériau polymère. On obtient de la sorte, une anche présentant des propriétés mécaniques renforcées dans la direction des fibres parallèles par rapport à la direction transversale. On retrouve ainsi les caractéristiques des lamelles de roseau naturel permettant de réaliser des anches.

Au surplus, grâce à la mise en oeuvre d'un matériau polymère thermoplastique, également pour la matrice, le procédé de fabrication est rendu grandement plus aisé. En effet, le matériau thermoplastique peut aisément être porté d'une température ambiante à laquelle il est rigide à une température de fusion à laquelle il se ramollit. Aussi, on vient aisément porter le matériau thermoplastique à sa température de fusion pour pouvoir y noyer les fibres. Ensuite, on provoque l'abaissement de la température du matériau thermoplastique de la matrice afin qu'il retrouve sa rigidité originelle, tandis que les fibres sont emprisonnées à l'intérieur. Ainsi qu'on l'expliquera plus en détail dans la suite de la description, différentes méthodes de mise en oeuvre sont possibles.

De façon particulièrement avantageuse, ledit autre matériau polymère des fibres présente une température de fusion supérieure à la température de fusion dudit un matériau polymère de la matrice. Ainsi, lorsque l'on vient noyer les fibres dans le matériau polymère de la matrice ramollie, le matériau polymère thermoplastique des fibres n'est aucunement affecté par la température à laquelle est porté le matériau de la matrice. Lorsque la température de ce dernier est abaissée, les fibres sont emprisonnées à l'intérieur de la matrice sans que leurs propriétés mécaniques n'aient été affectées.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de dessus d'une anche composite conforme à l'invention ;
- la Figure 2 est une vue schématique de la tranche de l'anche composite illustrée sur la figure 1 ;
- la Figure 3 est une vue schématique arrière de l'anche composite illustrée sur la figure 1 ;
- la Figure 4 est un synoptique d'une installation mettant en oeuvre un procédé de fabrication d'une anche composite selon l'invention conformément à un premier mode de réalisation ; et,
- la Figure 5 est un synoptique d'une installation mettant en oeuvre un procédé de fabrication d'une anche composite selon l'invention conformément à un second mode de réalisation.

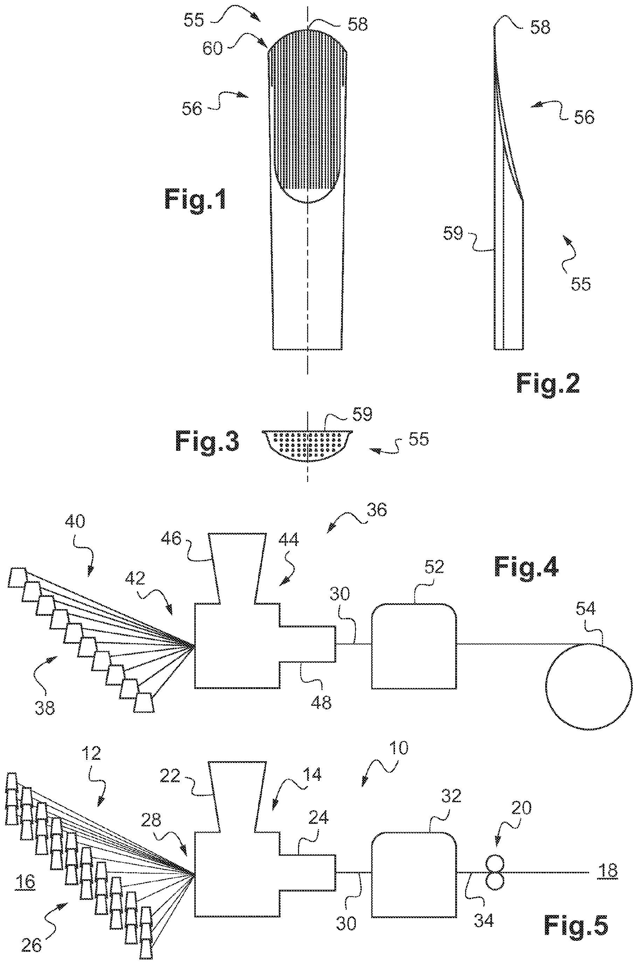

On se référera tout d'abord aux figures 4 et 5 afin de décrire différents modes de fabrication d'une anche composite conforme à l'invention. Dans les deux modes de mise en oeuvre du procédé selon l'invention, on réalise un jonc composite qui pourra être tronçonné pour ensuite pouvoir être taillé en lamelles de manière à former une anche. En outre, dans les deux modes de mise en oeuvre, on utilise des fibres de renfort d'un matériau polymère réunies en différentes mèches ou bien en fils.

Ces fibres de matériau polymère sont faites d'un matériau polymère thermoplastique, et plus précisément d'un matériau appartenant à la catégorie des polyoléfines, ou polyalcènes. Ce sont des polymères aliphatiques saturés. Plus précisément, le matériau polymère mis en oeuvre est un copolymère oléfinique. Dans l'exemple présenté ici, les fibres de renfort sont en polypropylène et leur température de fusion est voisine de 160 °C. Idéalement, le polymère présente un coefficient de Poisson voisin de 0,5. Au surplus, sa température de transition vitreuse est comprise entre -150 °C et 0 °C.

Il est également envisagé de mettre en oeuvre des fibres en polyéthylène dont la température de fusion est également voisine de 160 °C.

En outre, selon les deux modes de fabrication présentés sur les figures 4 et 5, on met en oeuvre un matériau polymère thermoplastique destiné à former la matrice. Selon l'exemple présenté ici, le matériau polymère est une polyoléfine dont la température de fusion est inférieure à celle du polymère thermoplastique des fibres. En l'espèce, il s'agit d'un terpolymère propylène éthylène polypropylène. Il est choisi, d'une part de manière à ce que sa température de fusion soit inférieure à celle de la température de fusion des fibres, et de l'ordre de 130 °C, avantageusement 140 °C, et d'autre part de façon que sa densité soit comprise entre 0,80 et 0,92, par exemple entre 0,80 et 0,90. Au surplus, on observera que le matériau polymère de la matrice présente une température de transition vitreuse comprise entre -100 °C et 0 °C et de préférence entre -60 °C et -10 °C.

Ainsi qu'on l'expliquera ci-après, en choisissant des polymères thermoplastiques de même nature, quoi que leurs températures de fusion soit sensiblement différentes, on obtient une meilleure adhésion des fibres et de la matrice. Selon une variante de réalisation on prévoit de mettre en oeuvre un polyéthylène basse densité en tant que matrice et des fibres de renfort faite d'un polyéthylène haute densité.

On ajoutera que ces polymères thermoplastiques oléfiniques sont reconnus d'innocuité au contact alimentaire.

Est représentée sur la figure 5, une installation 10 permettant de réaliser directement un jonc composite, selon un premier mode de réalisation. Elle fonctionne selon le principe de la pultrusion, c'est-à-dire que l'on vient tirer des premiers faisceaux de fibres 12 à travers une première extrudeuse 14. Ces faisceaux de fibres sont assimilables à des faisceaux de filaments continus sensiblement parallèles et non torsadés. Les premiers faisceaux de fibres 12 sont tirés d'un premier amont 16 vers un premier aval 18 au moyen de rouleau d'entraînement 20. L'extrudeuse 14 présente schématiquement une première trémie 22 chargée du terpolymère précité destiné à former la matrice, et une première vis d'extrusion 24 destinée à ramollir le polymère et à l'entraîner. Le terpolymère est chargé dans la première trémie 22 sous forme pulvérulente ou bien sous forme de granulés.

En amont 16, les premiers faisceaux de fibres 12 sont chargés sur un premier bobinoir 26 comprenant une pluralité de premières ensouples recevant chacune une mèche de fibres continues. Les mèches de fibres, ou faisceaux de fibres 12, sont guidées à travers une première entrée 28 de l'extrudeuse 14 et sont étendues parallèlement les unes aux autres à l'intérieur de l'extrudeuse 14. Les mèches de fibres s'étendent selon une direction transversale et selon une direction verticale sur plusieurs couches superposées. Elles traversent ainsi la filière de la vis d'extrusion 24 de manière à être noyées avec le terpolymère précité en fusion. La température de fusion des fibres étant supérieure à la température de fusion de la matrice, celles-ci ne sont aucunement endommagées lorsque le terpolymère en fusion vient à leur contact. Elles conservent de la sorte leurs propriétés mécaniques à l'intérieur de la matrice après refroidissement.

La filière présente une section rectangulaire comprise entre 3,5 et 5,5 mm d'épaisseur et entre 15 mm et 25 mm de largeur. Ainsi, un jonc formé 30 est étiré en dehors de la vis d'extrusion 24 pour entrer dans un dispositif de refroidissement 32. On obtient de la sorte en sortie un jonc durci 34 présentant une section sensiblement égale à la section de la filière précitée. Les mèches de fibre sont alors emprisonnées longitudinalement et parallèlement entre elles à l'intérieur du jonc durci 34. Au surplus, selon une section, les différentes mèches de fibre sont régulièrement espacées les unes des autres. Avantageusement, le pourcentage de fibres dans le jonc obtenu est compris entre 35 et 50 %, par exemple 45 %.

Le jonc durci 34 est alors tronçonné en longueur voisine de 90 mm. Ces tronçons sont ensuite repris pour pouvoir être usinés et transformés en anches. On expliquera plus en détail dans la suite de la description en référence aux figures 1 à 3, la forme des anches obtenues après usinage des tronçons de jonc.

Sur la figure 4 à laquelle on se référera maintenant, une installation de type fil à fil 36 est représentée schématiquement. Elle permet de réaliser, selon un deuxième mode de réalisation, des couches composites lesquelles seront ensuite superposées pour former des joncs.

Ainsi, un second bobinoir 38 permet de stocker des seconds faisceaux de mèches de fibres 40 du même type que les faisceaux de mèches de fibres précités. Les faisceaux de mèches de fibres 40 sont guidés vers l'entrée 42 d'une seconde extrudeuse 44 équipée d'une seconde trémie 46 et d'une seconde vis d'extrusion 48. La seconde trémie 46 est chargée d'un terpolymère identique au terpolymère précité. Ainsi, les mèches de fibres sont étendues côte à côte dans une même direction à travers la seconde extrudeuse 44, parallèlement à la seconde vis extrusion 48. La seconde vis d'extrusion 48 délivre alors sur les mèches de fibres étendues côte à côte, le terpolymère en fusion de manière à réaliser une nappe de fibres liées 50, d'une largeur comprise entre 15 mm 25 mm. La nappe de fibre liée 50 traverse alors un second dispositif de refroidissement 52 pour pouvoir ensuite être enroulée sur une bobine 54.

Ensuite, des longueurs de nappe de fibres liées 50 sont superposées et introduites dans une calandre chauffée, par exemple à 145 °C, de manière à former un jonc cohérent. En effet, sous l'effet de la chaleur et de la pression, les nappes de fibres liées 50 se collent les unes aux autres pour ne former qu'une matrice continue à l'intérieur de laquelle sont étendues des couches superposées de fibres de renfort. Le jonc ainsi obtenu, tout comme le précédent peut alors être tronçonné en longueurs voisines de 90 mm également.

Ainsi, selon les deux procédés décrits ci-dessus on obtient un jonc composite anisotrope. En effet, grâce aux mèches de fibres étendues longitudinalement, le module de traction est bien supérieur suivant le sens de la longueur du jonc par rapport au module de traction suivant le sens de la largeur. Préférentiellement, le module de traction suivant le sens de la longueur du jonc composite est compris entre 5000 et 15 000 MPa, tandis que le module de traction selon le sens de la largeur est inférieur à une valeur comprise entre 5 fois moins et 15 fois moins la valeur du module de traction selon le sens de la longueur.

En outre, bien que la densité relative du matériau polymère thermoplastique des fibres soit sensiblement supérieure à 0,9, la masse de terpolymère constituant la matrice étant prépondérante, la densité relative globale du jonc demeure comprise entre 0,80 et 0,92, avantageusement entre 0,80 et 0,90.

Les tronçons de jonc obtenus par l'une ou l'autre des installations décrites ci-dessus vont ensuite être usinés de manière à former les anches. Tout d'abord, pour fabriquer une anche 55 adaptée aux clarinettes en si bémol, et telle que représentée sur les figures 1 à 3, on réalise une ébauche dont l'épaisseur est sensiblement supérieure à 3,3 mm, la largeur à 16,4 mm et la longueur à 69 mm. Les fibres de renfort s'étendent ainsi parallèlement entre elles suivant la longueur de l'ébauche, car en effet, les mèches de fibres s'étendent selon le sens longitudinal du jonc dont l'ébauche est issue. Ensuite, on usine une face inférieure plane 59, communément appelée table de l'anche, puis les côtés de l'anche, et une partie supérieure 56 en biseau, précisément dénommée biseau de l'anche. Pour ce faire, on entame l'ébauche à mi-hauteur et on l'amincit progressivement jusqu'à une extrémité libre formant une arrête 58 avec la face inférieure plane 59. L'arrête 58, aussi dénommée bout de l'anche, est usinée selon une forme arrondie 60 de manière à obtenir une convexité.

On observera que les dimensions des anches varient en fonction du type d'instruments dans lesquels elles sont installées. Partant, l'usinage des tronçons de jonc n'est pas limité aux dimensions ci-dessus indiquées.

De plus, puisque les fibres de renfort s'étendent parallèlement entre elles suivant la longueur de l'ébauche, elles s'étendent donc parallèlement entre elles suivant la longueur de l'anche.

Selon un troisième mode de réalisation non représenté, la matrice en matériau thermoplastique, est préformée sous la forme de bande, et ensuite, les fibres de renfort y sont associées par calandrage, de manière à pouvoir réaliser des couches de bande composites du même que celles obtenues selon le deuxième mode de réalisation. Selon un mode d'exécution, la calandre mise en oeuvre est une calandre chauffante, elle présente un cylindre chauffant rigide apte à venir en contact contre un cylindre revêtu d'une surface déformable, par exemple en polyuréthane. La température de calandrage est par exemple voisine de 150 C°. Ainsi, la bande préformée et le faisceau de fibres de renfort convergent vers la calandre entre les deux cylindres. Grâce au chauffage de la calandre, la bande préformée se ramollit, tandis que les fibres des mèches de fibres sont comprimées et enfoncées à l'intérieur de la bande entre les deux cylindres.

Selon une autre variante de réalisation, le faisceau de fibres et calandré entre deux bandes préformées pour former la bande composite.

Les bandes composites sont ensuite découpées et superposés pour être thermoformées dans un moule de thermoformage présentant deux empreintes opposées. Une pluralité de bandes d'une longueur donnée, sont mises en oeuvre. Entre 20 et 40 bandes composites par exemple, sont superposées et introduites dans le moule, puis comprimées à chaud ensemble. De la sorte, on obtient des joncs analogues à ceux obtenus selon le deuxième mode de réalisation, d'une épaisseur comprise par exemple entre 2,5 et 4,5 mm.

## Revendications

1. Anche composite (55) pour instrument à vent présentant une matrice faite d'un matériau polymère et une pluralité de fibres de renfort faites d'un autre matériau polymère, noyée à l'intérieur de ladite matrice, ledit autre matériau polymère étant un matériau polymère thermoplastique ;
**caractérisée en ce que** les fibres de renfort de ladite pluralité de fibres sont des fibres continues s'étendant parallèlement entre elles à l'intérieur de ladite matrice selon une direction longitudinale de ladite anche et sur toute sa longueur,
et **en ce que** ledit un matériau polymère est un matériau polymère thermoplastique, ledit un matériau polymère et ledit autre matériau polymère appartenant à la famille des polyoléfines.

2. Anche composite selon la revendication 1, **caractérisée en ce que** ledit un matériau polymère est un terpolymère propylène éthylène polypropylène.

3. Anche composite selon la revendication 1 ou 2, **caractérisée en ce que** ledit un matériau polymère présente une densité relative comprise entre 0,80 et 0,92.

4. Anche composite selon l'une quelconque des revendications 1 à 3, **caractérisée en ce que** ledit autre matériau polymère est le polypropylène.

5. Anche composite selon l'une quelconque des revendications 1 à 4, **caractérisée en ce que** ledit autre matériau polymère présente une température de fusion supérieure à la température de fusion dudit un matériau polymère.

6. Procédé de fabrication d'une anche composite du type comprenant les étapes suivantes :
a) on fournit un matériau polymère à l'état fondu et une pluralité de fibres faites d'un autre matériau polymère, ledit autre matériau polymère étant un matériau polymère thermoplastique ;
b) on noie lesdites fibres à l'intérieur dudit matériau polymère à l'état fondu ;
c) on provoque le durcissement dudit un matériau polymère à l'état fondu de manière à emprisonner lesdites fibres ; et,
d) on forme ladite anche composite dans ledit matériau polymère durci ;
**caractérisé en ce qu'**à l'étape a), on fournit un matériau polymère thermoplastique à l'état fondu et une pluralité de fibres continues, ledit un matériau polymère et ledit autre matériau polymère appartenant à la famille des polyoléfines, tandis qu'à l'étape b), on maintient les fibres de ladite pluralité de fibres sensiblement parallèlement entre elles pour noyer ladite pluralité de fibres à l'intérieur dudit matériau polymère et pour pouvoir former une anche dont lesdites fibres s'étendent parallèlement entre elles suivant toute la longueur de ladite anche.

7. Procédé selon la revendication 1, **caractérisé en ce que** ledit un matériau polymère fournit à l'étape a) est un terpolymère propylène éthylène polypropylène.

8. Procédé selon la revendication 6 ou 7, **caractérisé en ce que** ledit autre matériau polymère présente une température de fusion supérieure à la température de fusion dudit un matériau polymère.

## Patentansprüche

1. Verbundrohrblatt (55) für ein Blasinstrument, das eine Matrix, die aus einem Polymermaterial hergestellt ist, und eine Vielzahl von Verstärkungsfasern aufweist, die aus einem anderen Polymermaterial hergestellt sind, die in die Matrix eingelassen sind, wobei das andere Polymermaterial ein thermoplastisches Polymermaterial ist,
**dadurch gekennzeichnet, dass** die Verstärkungsfasern der Vielzahl von Fasern kontinuierliche Fasern sind, die sich parallel zueinander innerhalb der Matrix entlang einer Längsrichtung des Rohrblatts und über seine gesamte Länge erstrecken,
und dass das eine Polymermaterial ein thermoplastisches Polymermaterial ist, wobei das Polymermaterial und das andere Polymermaterial der Familie der Polyolefine angehören.

2. Verbundrohrblatt nach Anspruch 1, **dadurch gekennzeichnet, dass** das eine Polymermaterial ein Propylen Ethylen Polypropylen Terpolymer ist.

3. Verbundrohrblatt nach Anspruch 1 oder 2, **dadurch gekennzeichnet, dass** das eine Polymermaterial eine relative Dichte zwischen 0,80 und 0,92 aufweist.

4. Verbundrohrblatt nach einem der Ansprüche 1 bis 3, **dadurch gekennzeichnet, dass** das andere Polymermaterial Polypropylen ist.

5. Verbundrohrblatt nach einem der Ansprüche 1 bis 4, **dadurch gekennzeichnet, dass** das andere Polymermaterial eine Schmelztemperatur über der Schmelztemperatur des einen Polymermaterials aufweist.

6. Verfahren zur Herstellung eines Verbundrohrblatts, umfassend die folgenden Schritte:
a) Bereitstellen eines Polymermaterials im geschmolzenen Zustand und einer Vielzahl von Fasern, die aus einem anderen Polymermaterial hergestellt sind, wobei das andere Polymermaterial ein thermoplastisches Polymermaterial ist;
b) Einlassen der Fasern in das Polymermaterial im geschmolzenen Zustand;
c) Aushärten des Polymermaterials im geschmolzenen Zustand, um die Fasern einzusperren; und
d) Bilden des Verbundrohrblatts aus dem gehärteten Polymermaterial,
**dadurch gekennzeichnet, dass** in Schritt a) ein thermoplastisches Polymermaterial im geschmolzenen Zustand und eine Vielzahl von kontinuierlichen Fasern bereitgestellt werden, wobei das eine Polymermaterial und das andere Polymermaterial der Familie der Polyolefine angehören, während in Schritt b) die Fasern der Vielzahl von Fasern im Wesentlichen zueinander parallel gehalten werden, um die Vielzahl von Fasern in das Polymermaterial einzulassen und ein Rohrblatt bilden zu können, dessen Fasern sich parallel zueinander über die gesamte Länge des Rohrblatts erstrecken.

7. Verfahren nach Anspruch 1, **dadurch gekennzeichnet, dass** das eine Polymermaterial, das in Schritt a) bereitgestellt wird, ein Propylen Ethylen Polypropylen Terpolymer ist.

8. Verfahren nach Anspruch 6 oder 7, **dadurch gekennzeichnet, dass** das andere Polymermaterial eine Schmelztemperatur über der Schmelztemperatur des einen Polymermaterials aufweist.

## Claims

1. A composite reed (55) for a wind instrument which has a matrix made of a polymer material and a plurality of reinforcing fibers made of another polymer material, embedded inside said matrix, said other polymer material being a thermoplastic polymer material;
**characterized in that** the reinforcing fibers of said plurality of fibers are continuous fibers **extending parallel to one another** inside said matrix **along the** longitudinal direction **of the reed and over its entire length,**
and **in that said a polymer material is a thermoplastic polymer material, said a polymer material and that said another polymer material belong to the polyolefin family.**

2. The composite reed as claimed in claim 1, **characterized in that** said a polymer material is a propylene/ethylene/polypropylene terpolymer.

3. The composite reed as claimed in claim 1 or 2, **characterized in that** said a polymer material has a relative density of between 0.80 and 0.92.

4. The composite reed as claimed in any one of claims 1 to 3, **characterized in that** said other polymer material is polypropylene.

5. The composite reed as claimed in any one of claims 1 to 4, **characterized in that** said other polymer material has a melting point above the melting point of said a polymer material.

6. A process for producing a composite reed of the type comprising the following steps:
a) a polymer material in the molten state and a plurality of fibers made of another polymer material are provided, said other polymer material being a thermoplastic polymer material;
b) said fibers are embedded inside said polymer material in the molten state;
c) curing of said a polymer material in the molten state is brought about so as to trap said fibers; and
d) said composite reed is formed in said cured polymer material;
**characterized in that**, **in step a)** a thermoplastic polymer material in the molten state and a plurality of **continuous** fibers are provided, **said a polymer material and that said another polymer material belong to the polyolefin family**
in step b), the fibers of said plurality of fibers are kept substantially parallel to one another for embedding said plurality of fibers inside said polymer material **and so as to form a reed which said fibers extend parallel to one another along the entire length of the reed..**

7. The process as claimed in claim 6, **characterized in that**, in step a) the said provided polymer material is a propylene/ethylene/polypropylene terpolymer.

8. The process as claimed in any one of claims 6 or 7, **characterized in that** said other polymer material has a melting point above the melting point of said a polymer material.
